# EUROPÄISCHE PATENTSCHRIFT

(11) **EP 1 549 535 B1**
(45) Veröffentlichungstag und Bekanntmachung des Hinweises auf die Patenterteilung: **01.03.2006**
(21) Anmeldenummer: 03750516.1
(22) Anmeldetag: 11.09.2003
(51) Int. Cl.: B60S 1/52

(54) **WASCHVORRICHTUNG FÜR EINE FAHRZEUGSCHEIBE**
WASHING DEVICE FOR A GLASS PANE IN A MOTOR VEHICLE
DISPOSITIF DE LAVAGE D'UNE VITRE DE VEHICULE AUTOMOBILE

(30) Priorität: 09.10.2002 DE 10246979
(43) Veröffentlichungstag der Anmeldung: 06.07.2005
(73) Patentinhaber: DaimlerChrysler AG, 70567 Stuttgart (DE)
(72) Erfinder: BERGER, Josef, 72649 Wolfschlugen (DE); BRODBECK, Bernd, 71154 Nufringen (DE)
(74) Vertreter: Rauscher, Steffen
(86) Internationale Anmeldenummer: PCT/EP2003/010071
(87) Internationale Veröffentlichungsnummer: WO 2004/035359

(56) Entgegenhaltungen:
- DE-A- 10 053 684
- DE-A- 19 950 738
- DE-U- 9 201 119

## Beschreibung

Die Erfindung betrifft eine Waschvorrichtung für eine Fahrzeugscheibe, insbesondere für eine Windschutzscheibe eines Kraftfahrzeugs, gemäß dem Oberbegriff des Patentanspruchs 1.

Bei einer bekannten Waschvorrichtung dieser Art (DE 92 01 119 U1) sind in einer Blende aus Kunststoff, die sich zwischen der Hinterkante der Motorhaube und der Windschutzscheibe über die Breite der Windschutzscheibe erstreckt, zwei in Längsrichtung verlaufende Kanäle vorgesehen, die sich jeweils von einem Ende der Blende zur Mitte hin erstrecken und jeweils über Anschlußnippel mit einer Waschwasser-Zuleitung in Verbindung stehen. Die Längskanäle sind an definierten Stellen mit Löchern versehen. Die beheizten und jeweils mit einem Rückschlagventil ausgestatteten Waschwasserdüsen sind als eigenständige Einheiten hergestellt und weisen einen Anschlußstutzen auf, der in eines der im Längskanal vorhandenen Löcher so eingesetzt wird, daß die Spritzöffnung der Waschwasserdüse zur Windschutzscheibe weist.

Bei einer bekannten Scheibenwaschanlage für ein Kraftfahrzeug (DE 43 04 661 C2) ist die Waschwasserleitung von einem weichen, elastischen Kunststoffschlauch gebildet, der ein etwa birnenförmiges Profil aufweist, in dessen mittlerem Bereich ein Strömungskanal für das Waschwasser verläuft. Auf der Höhe einer vorgesehenen Waschwasserdüse ist der Wandbereich des Kunststoffschlauchs mit einer bis in den Strömungskanal reichenden Öffnung versehen, deren Achse radial zum Strömungskanal verläuft. In diese Radialöffnung ist ein mit einem Düsenkörper verbundenes Anschlußrohr eingesteckt. Im Düsenkörper ist die Spritzöffnung ausgebildet. Parallel zum Strömungskanal sind in den von den Radialöffnungen abgekehrten Bereich der Wandung des Kunststoffschlauchs zwei Heizleiter eingebettet, die an einer Stromquelle angeschlossen sind und eine Erwärmung des im Strömungskanal fließenden Waschwassers bewirken. Zusätzlich ist noch der Bereich des Düsenkörpers mittels eines PTC-Elements beheizt.

Der Erfindung liegt die Aufgabe zugrunde, eine Waschvorrichtung für eine Fahrzeugscheibe der eingangs genannten Art anzugeben, die der Forderung nach reduziertem Einbauraum sowie den Vorschriften des Fußgängerschutzes genügt.

Die Aufgabe ist erfindungsgemäß durch die Merkmale des Patentanspruchs 1 gelöst.

Die erfindungsgemäße Waschvorrichtung hat den Vorteil, daß die als eigenständige Einheiten hergestellte mindestens eine Waschwasserdüse trotz der Integration eines Rückschlagventils sehr flachbauend ist und ein Quermaß aufweist, das nicht oder nur wenig größer ist als das Außenmaß der Waschwasserleitung, so daß sich eine Mehrzahl von Waschwasserdüsen sehr gut in die fahrzeugseitig vorgehaltene Aufnahme einlegen läßt und diese nur einen auf die Waschwasserleitung abgestimmten Einbauraum zur Verfügung stellen muß. Die flachbauenden Waschwasserdüsen bilden keine in der Scheibenumgebung herausragende Vorsprünge, die eine Verletzungsgefahr für Fußgänger beim Aufprall auf die Motorhaube hervorrufen können.

Vorteilhafte Ausführungsformen der erfindungsgemäßen Waschvorrichtung mit zweckmäßigen Weiterbildungen und Ausgestaltungen der Erfindung sind in den weiteren Patentansprüchen angegeben.

Gemäß einer bevorzugten Ausführungsform der Erfindung sind Rohrstück und Ventilgehäuse aus gut wärmeleitendem Material hergestellt und ist im Innern der Waschwasserleitung ein durchgehender, isolierter Heizdraht eingelegt. Durch die Verlegung des Heizdrahtes in das das Waschwasser führende Strömungsinnere der Waschwasserleitung kann einerseits die Wandung der Waschwasserleitung relativ dünn gehalten werden, so daß ein geringer Außendurchmesser der Waschwasserleitung erzielt wird, und andererseits der Heizdraht problemlos durch das Rohrstück der Waschwasserdüse hindurchgeführt werden. Dies spart sowohl Herstellungs- als auch Montägekosten für eine zusätzliche Heizung der Waschwasserdüse, als auch Einbauraum. Durch die Flachbauweise des Ventilgehäuses liegt der so verlegte Heizdraht sehr dicht an der Spritzöffnung, so daß in Verbindung mit dem gut wärmeleitenden Material von Rohrstück und Ventilgehäuse der Bereich der Spritzöffnung sehr gut erwärmt wird. Ein zusätzliches PCT-Heizelement, wie es bei den Waschdüsen der eingangs beschriebenen, bekannten Scheibenwaschanlage zur Verhinderung der Vereisung der Spritzöffnung eingesetzt wird, kann entfallen, so daß für die beheizte Waschwasserdüse eine weitere Kostensenkung erreicht wird.

Gemäß einer vorteilhaften Ausführungsform der Erfindung ist die Spritzöffnung in einem separaten Spritzmodul integriert, das in einer Gehäuseöffnung im Ventilgehäuse, deren Öffnungsnormale oder -achse quer zur Gehäuseachse verläuft, auswechselbar eingesetzt. Vorzugsweise ist dabei die Gehäuseöffnung von einem an dem Ventilgehäuse ausgebildeten Kragen umschlossen, in den das Spritzmodul einklipsbar ist. Diese konstruktive Maßnahme hat den Vorteil, daß bei verstopfter Spritzöffnung zur Wiederherstellung der Funktion der Waschwasserdüse lediglich das Spritzmodul ausgewechselt werden muß, wobei der Auswechselvorgang infolge des einfachen Einklipsens des Spritzmoduls in das Ventilgehäuse sehr schnell und bequem durchgeführt werden kann.

Gemäß einer vorteilhaften Ausführungsform der Erfindung ist die Waschwasserleitung ein flexibler Schlauch, der mindestens zwei durch jeweils ein Rohrstück miteinander verbundene Schlauchabschnitte aufweist. Der Schlauch ist in einem nach oben offenen, im Querschnitt U-förmigen Schacht eingelegt, in dessen zur Scheibe näherliegender Schachtwand mindestens eine Aussparung vorgesehen ist, in die die Spritzöffnung hineinragt. Der Schacht ist einstückiger Bestandteil einer unteren Abdeckung, die mit einem aufliegenden Teil einer Motorhaube einen Luftkanal einschließt. Der Schacht ist bei geschlossener Motorhaube durch diese von oben her abgedeckt. Diese Art der Integration der Waschvorrichtung in das Fahrzeug ist montagefreundlich und stellt keine hohen Anforderungen an die Größe des verfügbaren Einbauraums. Die im Schlauchverlauf integrierten Waschwasserdüsen werden einfach an den vorhandenen Aussparungen im Schacht plaziert und dort mit durch die Aussparungen hindurchweisender Spritzrichtung festgesetzt.

Besitzt die Waschwasserdüse gemäß einer weiteren Ausführungsform der Erfindung noch einen von dem Ventilgehäuse radial abstehenden Kragen zum Einklipsen des Spritzmoduls, so kann der Kragen zugleich zur formschlüssigen Festlegung der Waschwasserdüse in der Aussparung im Schacht herangezogen werden.

Die Erfindung ist anhand eines in der Zeichnung dargestellten Ausführungsbeispiels im folgenden näher beschrieben. Es zeigen:
- Fig. 1: ausschnittweise einen Längsschnitt des zur Windschutzscheibe eines Kraftfahrzeugs weisenden hinteren Bereichs einer Motorhaube in Verbindung mit einer unteren Abdeckung eines Luftführungskanals,
- Fig. 2: einen Längsschnitt einer zwischen zwei Leitungsabschnitten einer Waschwasserleitung eingesetzten Waschwasserdüse,
- Fig. 3: eine vergrößerte Darstellung des Ausschnitts III in Fig. 2,
- Fig. 4: eine vergrößerte Darstellung des Schnitts IV-IV in Fig. 2.

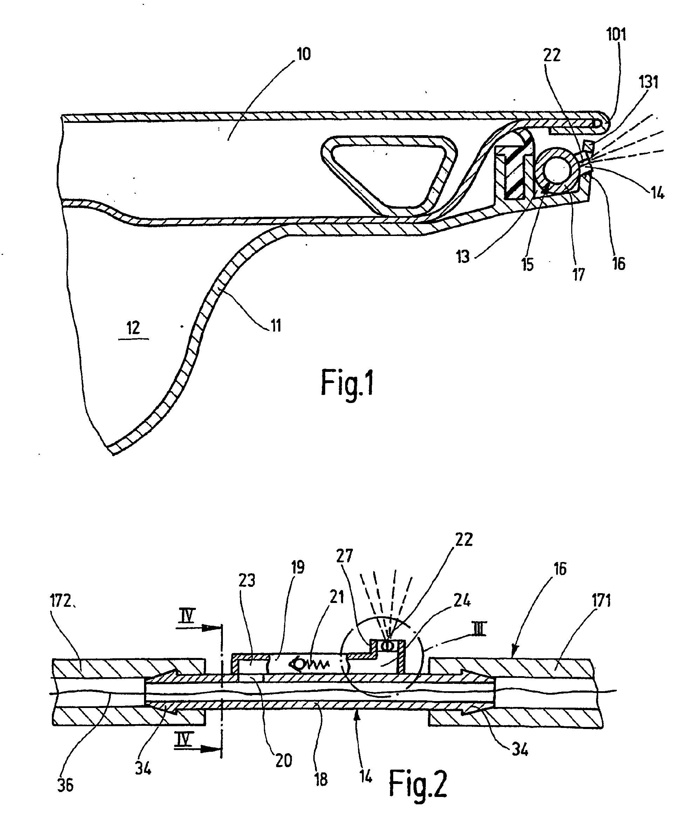

In Fig. 1 ist der hintere Bereich einer doppelwandig ausgeführten Motorhaube 10 skizziert, deren Hinterkante 101 mit Abstand von einer hier nicht dargestellten Front- oder Windschutzscheibe des Fahrzeugs unterhalb der Windschutzscheibe über die Breite der Windschutzscheibe verläuft. Im geschlossenen Zustand liegt die Motorhaube 10 auf einem Kunststoffteil auf, das die untere Abdeckung 11 für einen oberseitig von der Motorhaube 10 begrenzten Luftzuführkanal 12 bildet, der an einer Lufteintrittsöffnung in der Motorhaube 10 angeschlossen ist. In der Abdeckung 11 ist an ihrem der Windschutzscheibe zugekehrten Ende ein U-förmiger Schacht 13 einstückig ausgebildet, der nach oben hin offen ist und von der geschlossenen Motorhaube 10 überdeckt wird. Der Schacht 13 erstreckt sich über die gesamte Breite der Windschutzscheibe und nimmt eine mit Waschwasserdüsen 14 besetzte Waschwasserleitung 15 auf. In der zur Windschutzscheibe näher liegenden Schachtwand 131 sind Aussparungen 16 enthalten, in die in den Waschwasserdüsen 14 enthaltene Spritzöffnungen 22 hineinragen, so daß das aus den Spritzöffnungen 22 unter Druck ausgespritzte Waschwasser definierte Zonen der Windschutzscheibe benetzt. In dem vorgestellten Ausführungsbeispiel ist die Waschwasserleitung 15 als flexibler Schlauch 17 ausgebildet, der von oben her in den Schacht 13 eingelegt wird. Alternativ kann die Waschwasserleitung 15 auch von einem in der Abdeckung 11 integrierten Strömungskanal gebildet werden.

Jeder im Verlauf der Waschwasserleitung 15 bzw. des Schlauchs 17 liegende Waschwasserdüse 14 weist ein langgestrecktes Rohrstück 18 und ein am Rohrstück 18 radial angesetztes Ventilgehäuse 19 auf, das auch einstückig mit dem Rohrstück 18 ausgeführt sein kann. Das Ventilgehäuse 19 ist recht flach oder rund mit kleinerem Durchmesser ausgebildet und so an das Rohrstück 18 angeflanscht, daß seine Gehäuseachse parallel zur Achse des Rohrstücks 18 ausgerichtet ist. Das Ventilgehäuse 19 steht über eine Wandöffnung 20 im Rohrstück 18 mit dem im Innern des Rohrstücks 18 vorhandenen Strömungskanal in Verbindung. Im Ventilgehäuse 19 ist ein Rückschlagventil 21, das in Fig. 2 nur symbolisch angedeutet ist, und die Spritzöffnung 22 der Waschwasserdüse 14 integriert. Das Rückschlagventil 21, das in üblicher Weise ein mit einem Ventilsitz zusammenwirkendes Ventilglied und eine Ventilschließfeder aufweist, ist zwischen einer im Ventilgehäuse 19 ausgebildeten Ventileinlaßkammer 23 und einer im Ventilgehäuse 19 ausgebildeten Ventilauslaßkammer 24 angeordnet, wobei Ventileinlaßkammer 23 und Ventilauslaßkammer 24 in Achsrichtung des Ventilgehäuses 19 hintereinander angeordnet sind. Die Ventileinlaßkammer 23 überdeckt die Wandöffnung 20 im Rohrstück 18, und die Ventilauslaßkammer 24 weist die Spritzöffnung 22 auf.

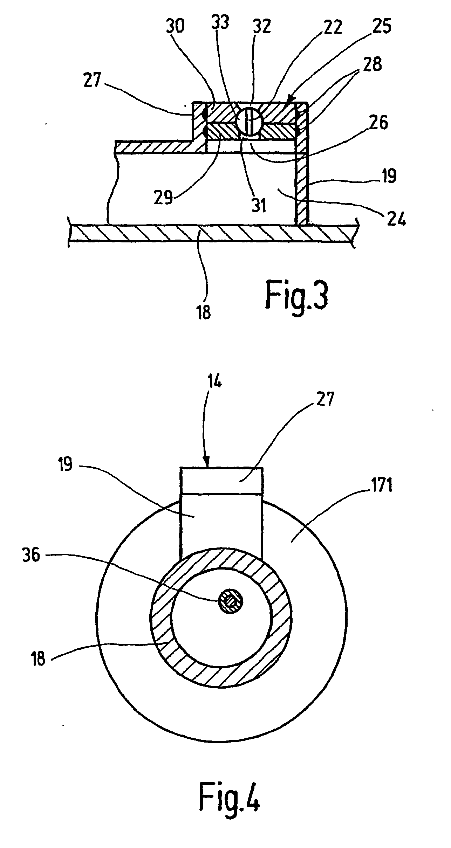

Die Spritzöffnung 22 ist in einem Spritzmodul 25 integriert, das als separates Bauteil in einer Gehäuseöffnung 26 des Ventilgehäuses 19 eingesetzt ist. Die Normale oder Achse der Gehäuseöffnung 26 ist dabei rechtwinklig zur Gehäuseachse des Ventilgehäuses 19 bzw. zur Achse des Rohrstücks 18 ausgerichtet. Wie besonders gut im vergrößerten Ausschnitt der Fig. 3 zu erkennen ist, ist die Gehäuseöffnung 26 von einem an dem Ventilgehäuse 19 ausgebildeten Kragen 27 umschlossen, wobei der Kragen 27 einstückig mit dem Ventilgehäuse 19 ausgeführt sein kann. Im Kragen 27 sind Klipsaufnahmen 28 eingearbeitet, in die das Spritzmodul 25 eingeklipst wird.

In dem beschriebenen Ausführungsbeispiel besteht das Spritzmodul 25 aus einem unteren Modulplättchen 29 und einem oberen Modulplättchen 30, die jeweils mit einem zentralen Durchlaßloch 31 bzw. 32 versehen sind, wobei die beiden Durchlaßlöcher 31, 32 miteinander fluchten. Zwischen den beiden Modulplättchen 31, 32 ist ein Düsenkörper 33 in Form einer Kugel schwenkbar festgeklemmt, in der die Spritzöffnung 22 als durch die Kugelmitte verlaufende Bohrung ausgebildet ist, die mit den beiden Durchlaßlöchern 31, 32 kommuniziert. Im beschriebenen Ausführungsbeispiels weist der Düsenkörper 33 nur eine Spritzöffnung 22 auf, er kann jedoch auch mit mehreren Spritzöffnungen versehen sein, die zueinander winkelversetzt sind.

Zum Verbinden der Waschwasserdüse 14 mit der Waschwasserleitung 15 ist das Rohrstück 18 in eine Schnittstelle der Waschwasserleitung 15 eingesetzt und verbindet bei der Ausführung der Waschwasserleitung 15 als Schlauch 17 zwei aufeinanderfolgende Schlauchstücke 171 und 172 miteinander (Fig. 2). Hierzu ist an jedem Ende des Rohrstücks 18 ein Anschlußnippel 34 bzw. 35 ausgebildet, auf den das eine Ende des Schlauchstücks 171 bzw. 172 aufgeschoben ist.

In dem das Waschwasser führenden Strömungskanal der Waschwasserleitung 15 bzw. des Schlauchs 17 verläuft ein durchgehender, isolierter Heizdraht 36, der auch durch das Rohrstück 18 hindurchgeführt ist. Bei Anschluß des Heizdrahts 36 an eine Stromquelle wird das in der Waschwasserleitung 15 fließende Waschwasser erwärmt und so ein Gefrieren verhindert oder eine zugefrorene Waschwasserleitung 15 wieder aufgetaut. Das Rohrstück 18 und das Ventilgehäuse 19 sind aus gut wärmeleitendem Material hergestellt, so daß aufgrund der langgestreckten, flachen Ausführung des Ventilgehäuses 19 die von dem Heizdraht 36 erzeugte Wärme noch in ausreichendem Maße zu dem Spritzmodul 25 gelangt und dort auch eine Vereisung der Spritzöffnung 22 verhindert oder beseitigt.

## Patentansprüche

1. Waschvorrichtung für eine Fahrzeugscheibe, insbesondere für eine Windschutzscheibe eines Kraftfahrzeugs, mit einer längs der Scheibenunterkante verlaufenden Waschwasserleitung (15) und mit mindestens einer an der Waschwasserleitung (15) angeschlossenen Waschwasserdüse (14), die mindestens eine Spritzöffnung (22) und ein der mindestens einen Spritzöffnung (22) vorgeordnetes Rückschlagventil (21) aufweist,
**dadurch gekennzeichnet,**
**daß** die Waschwasserdüse (14) ein Rohrstück (18) und ein das Rückschlagventil (21) enthaltendes Ventilgehäuse (19) aufweist, das außen an dem Rohrstück (18) mit zur Rohrstückachse paralleler Gehäuseachse angeflanscht ist, daß die mindestens eine Spritzöffnung (22) im Ventilgehäuse (19) mit zur Gehäuseachse quer verlaufender Öffnungsnormalen angeordnet ist und daß das Rohrstück (18) in eine Schnittstelle der Waschwasserleitung (15) eingesetzt ist.

2. Waschvorrichtung nach Anspruch 1,
**dadurch gekennzeichnet,**
**daß** das Rohrstück (18) und das Ventilgehäuse (19) aus gut wärmeleitendem Material besteht und daß im waschwasserführenden Innern der Waschwasserleitung (15) ein durchgehender, isolierter Heizdraht (36) verläuft.

3. Waschvorrichtung nach Anspruch 1 oder 2,
**dadurch gekennzeichnet,**
**daß** die Spritzöffnung (22) in einem Spritzmodul (25) integriert ist, das in einer Gehäuseöffnung (26) im Ventilgehäuse (19) auswechselbar eingesetzt ist.

4. Waschvorrichtung nach Anspruch 3,
**dadurch gekennzeichnet,**
**daß** die Gehäuseöffnung (26) von einem an dem Ventilgehäuse (19) ausgebildeten Kragen (27) umschlossen ist und daß das Spritzmodul (25) in den Kragen (27) einklipsbar ausgebildet ist.

5. Waschvorrichtung nach Anspruch 3 oder 4,
**dadurch gekennzeichnet,**
**daß** das Spritzmodul (25) ein unteres und oberes Modulplättchen (29, 30) mit fluchtenden Durchgangslöchern (31, 32) aufweist und daß zwischen den Modulplättchen (29, 30) ein die mindestens eine Spritzöffnung (22) aufweisender Düsenkörper (33) schwenkbar verklemmt ist.

6. Waschvorrichtung nach einem der Ansprüche 1 - 5,
**dadurch gekennzeichnet,**
**daß** im Ventilgehäuse (19) eine mit dem Innern des Rohrstücks (18) in Verbindung stehende Ventileinlaßkammer (23) und eine mit der mindestens einen Spritzöffnung (22) versehene Ventilauslaßkammer (24) ausgebildet ist, die in Richtung der Gehäuseachse hintereinander angeordnet sind, und daß zwischen Ventileinlaß- und -auslaßkammer (23, 24) das Rückschlagventil (21) angeordnet ist.

7. Waschvorrichtung nach einem der Ansprüche 1 - 6,
**dadurch gekennzeichnet**,
das Rohrstück (18) und das Ventilgehäuse (19) langgestreckt sind.

8. Waschvorrichtung nach Anspruch 7,
**dadurch gekennzeichnet**,
das Ventilgehäuse (19) flach ausgebildet ist.

9. Waschvorrichtung nach Anspruch 7,
**dadurch gekennzeichnet**,
das Ventilgehäuse (19) rund mit vorzugsweise minimalem Durchmesser ausgebildet ist.

10. Waschvorrichtung nach einem der Ansprüche 1 - 9,
**dadurch gekennzeichnet,**
**daß** die Waschwasserleitung (15) ein flexibler Schlauch (17) ist, der mindestens zwei durch jeweils ein Rohrstück (18) miteinander verbundene Schlauchstücke (171, 172) aufweist.

11. Waschvorrichtung nach Anspruch 10,
**dadurch gekennzeichnet,**
**daß** an den beiden freien Enden des Rohrstücks (18) jeweils ein Anschlußnippel (34, 35) ausgebildet ist, auf dem ein Ende eines Schlauchstücks (171 bzw. 172) aufgeschoben ist.

12. Waschvorrichtung nach Anspruch 10 oder 11,
**dadurch gekennzeichnet,**
**daß** der Schlauch (17) in einem nach oben offenen, im Querschnitt U-förmigen Schacht (13) einliegt, dessen zur Fahrzeugscheibe näherliegende Schachtwand (131) mindestens eine Aussparung (16) aufweist, in die die mindestens eine Spritzöffnung (22) der Waschwasserdüse (14) hineinragt.

13. Waschvorrichtung nach Anspruch 12,
**dadurch gekennzeichnet,**
**daß** der Schacht (13) einstückiger Bestandteil einer Abdeckung (11) ist, die mit einem aufliegenden Teil einer Motorhaube (10) einen Luftzuführkanal (12) einschließt, und daß die Motorhaube (10) den Schacht (13) von oben verschließt.

14. Waschvorrichtung nach einem der Ansprüche 1 - 9,
**dadurch gekennzeichnet,**
**daß** die Waschwasserleitung (15) als ein in einer Abdeckung (11) integrierter Kanal ausgebildet ist, die mit einem aufliegenden Teil einer Motorhaube (10) einen Luftführungskanal einschließt.

## Claims

1. Washing device for a glass pane in a vehicle, in particular for a windscreen of a motor vehicle, having a washing-water line (15) which runs along the lower edge of the glass pane and having at least one washing-water nozzle (14) which is connected to the washing-water line (15) and has at least one spray opening (22) and a non-return valve (21) which is arranged upstream of the at least one spray opening (22),
**characterized**
**in that** the washing-water nozzle (14) has a pipe section (18) and a valve housing (19) which contains the non-return valve (21) and is flange-connected to the outside of the pipe section (18) with its housing axis parallel to the axis of the pipe section, in that the at least one spray opening (22) is arranged in the valve housing (19) with its opening normal running transverse to the housing axis, and in that the pipe section (18) is inserted into an intersection point of the washing-water line (15).

2. Washing device according to Claim 1,
**characterized**
**in that** the pipe section (18) and the valve housing (19) are composed of a material which conducts heat well, and in that a continuous, insulated heating wire (36) runs in the washing water-carrying interior of the washing-water line (15).

3. Washing device according to Claim 1 or 2,
**characterized**
**in that** the spray opening (22) is integrated in a spray module (25) which is exchangeably inserted in a housing opening (26) in the valve housing (19).

4. Washing device according to Claim 3,
**characterized**
**in that** the housing opening (26) is surrounded by a collar (27) which is formed on the valve housing (19), and in that the spray module (25) is formed such that it can be clipped into the collar (27).

5. Washing device according to Claim 3 or 4,
**characterized**
**in that** the spray module (25) has a lower and an upper module plate (29, 30) with aligned through-holes (31, 32), and in that a nozzle body (33) which has the at least one spray opening (22) is pivotably clamped between the module plates (29, 30).

6. Washing device according to one of Claims 1-5,
**characterized**
**in that** a valve inlet chamber (23), which is connected to the interior of the pipe section (18), and a valve outlet chamber (24), which is provided with the at least one spray opening (22), are formed in the valve housing (19), these chambers being arranged in series in the direction of the housing axis, and in that the non-return valve (21) is arranged between the valve inlet and outlet chambers (23, 24).

7. Washing device according to one of Claims 1-6,
**characterized**
**in that** the pipe section (18) and the valve housing (19) are elongate.

8. Washing device according to Claim 7,
**characterized**
**in that** the valve housing (19) is of flat design.

9. Washing device according to Claim 7,
**characterized**
**in that** the valve housing (19) is of circular design with a preferably minimal diameter.

10. Washing device according to one of Claims 1-9,
**characterized**
**in that** the washing-water line (15) is a flexible hose (17) which has at least two hose sections (171, 172) which are each connected to one another by one pipe section (18).

11. Washing device according to Claim 10,
**characterized**
**in that** one connection nipple (34, 35) is formed at each of the two free ends of the pipe section (18), one end of a hose section (171 or 172) being pushed onto said nipple.

12. Washing device according to Claim 10 or 11,
**characterized**
**in that** the hose (17) is situated in a shaft (13) which is open at the top, has a U-shaped cross section and whose shaft wall (131), which is relatively close to the glass pane in the vehicle, has at least one cutout (16) into which the at least one spray opening (22) in the washing-water nozzle (14) projects.

13. Washing device according to Claim 12,
**characterized**
**in that** the shaft (13) is an integral constituent part of a cover (11) which, together with a part of an engine bonnet (10) which rests on said cover, encloses an air supply duct (12), and in that the engine bonnet (10) closes the shaft (13) from above.

14. Washing device according to one of Claims 1-9,
**characterized**
**in that** the washing-water line (15) is in the form of a duct which is integrated in a cover (11) which, together with a part of an engine bonnet (10) which rests on said cover, encloses an air supply duct.

## Revendications

1. Dispositif de lavage d'une vitre de véhicule, en particulier d'un pare-brise d'un véhicule automobile, avec une conduite d'eau de lavage (15) passant le long du bord inférieur de la vitre et avec au moins une buse d'eau de lavage (14) raccordée à la conduite d'eau de lavage (15), buse qui comporte au moins une ouverture de pulvérisation (22) et une soupape de retenue (21) disposée devant au moins l'une des ouvertures de pulvérisation (22), **caractérisé en ce que** la buse d'eau de lavage (14) comporte un tronçon de tube (18) et une cage de soupape (19) renfermant la soupape de retenue (21), cage qui à l'extérieur est bridée au tronçon de tube (18) avec l'axe de cage parallèle à l'axe du tronçon de tube, **en ce qu'**au moins l'une des ouvertures de pulvérisation (22) est disposée dans la cage de soupape (19) avec une normale d'ouverture transversale à l'axe de cage et **en ce que** le tronçon de tube (18) est placé dans une intersection de la conduite d'eau de lavage (15).

2. Dispositif de lavage selon la revendication 1, **caractérisé en ce que** le tronçon de tube (18) et la cage de soupape (19) se composent d'un matériau conduisant bien la chaleur et **en ce qu'**un fil de chauffe isolé, continu (36) passe dans l'espace intérieur conduisant l'eau de lavage de la conduite d'eau de lavage (15).

3. Dispositif de lavage selon la revendication 1 ou 2, **caractérisé en ce que** l'ouverture de pulvérisation (22) est intégrée dans un module de pulvérisation (25), lequel est placé de manière interchangeable dans une ouverture de cage (26) dans la cage de soupape (19) .

4. Dispositif de lavage selon la revendication 3, **caractérisé en ce que** l'ouverture de cage (26) est entourée d'un collet (27) formé à la cage de soupape (19), et **en ce que** le module de pulvérisation (25) est formé de manière clipsable dans le collet (27).

5. Dispositif de lavage selon la revendication 3 ou 4, **caractérisé en ce que** le module de pulvérisation (25) comporte une plaquette de module (29, 30) inférieure et supérieure avec des trous de passage (31, 32) alignés et **en ce qu'**un corps de buse (33) comportant au moins l'une des ouvertures de pulvérisation (22) est bloqué en pivotement entre les plaquettes de module (29, 30).

6. Dispositif de lavage selon l'une des revendications 1 à 5, **caractérisé en ce qu'**une chambre d'entrée de soupape (23) en liaison avec l'intérieur du tronçon de tube (18) et une chambre de sortie de soupape (24) pourvue au moins de l'une des ouvertures de pulvérisation (22) sont formées dans la cage de soupape (19), lesquelles sont disposées l'une derrière l'autre dans le sens de l'axe de cage, et **en ce que** la soupape de retenue (21) est disposée entre chambre d'entrée de soupape et chambre de sortie de soupape (23, 24).

7. Dispositif de lavage selon l'une des revendications 1 à 6, **caractérisé en ce que** le tronçon de tube (18) et la cage de soupape (19) sont allongées.

8. Dispositif de lavage selon la revendication 7, **caractérisé en ce que** la cage de soupape (19) est formée de manière plate.

9. Dispositif de lavage selon la revendication 7, **caractérisé en ce que** la cage de soupape (19) est formée de manière ronde avec de préférence un diamètre minimal.

10. Dispositif de lavage selon l'une des revendications 1 à 9, **caractérisé en ce que** la conduite d'eau de lavage (15) est un tuyau flexible (17), lequel comporte au moins deux tronçons de tuyau (171, 172) reliés l'un à l'autre par respectivement un tronçon de tube (18).

11. Dispositif de lavage selon la revendication 10, **caractérisé en ce qu'**aux deux extrémités libres du tronçon de tube (18) est formé respectivement un manchon de raccord (34, 35), sur lequel est enfilée une extrémité d'un tronçon de tuyau (171 et/ou 172).

12. Dispositif de lavage selon la revendication 10 ou 11, **caractérisé en ce que** le tuyau (17) repose dans un puits (13) en forme de U vu en coupe, ouvert vers le haut, dont la paroi de puits (131) plus proche de la vitre du véhicule comporte au moins un creux (16), dans lequel entre au moins l'une des ouvertures de pulvérisation (22) de la buse d'eau de lavage (14).

13. Dispositif de lavage selon la revendication 12, **caractérisé en ce que** le puits (13) est un élément, formé d'une pièce, d'un recouvrement (11) qui comprend avec une partie d'un capot (10) disposée en applique un canal d'apport d'air (12), et **en ce que** le capot (10) ferme le puits (13) par le haut.

14. Dispositif de lavage selon la revendication 1 à 9, **caractérisé en ce que** la conduite d'eau de lavage (15) est formée comme canal intégré dans un recouvrement (11), qui, avec une partie d'un capot (10) disposée en applique, renferme un canal d'apport d'air.
